Europäisches Patentamt

**European Patent Office**

**Office européen des brevets**

(11) Numero de publication: **0 156 719**

**A1**

(12) # DEMANDE DE BREVET EUROPEEN

(21) Numero de depot **85400459.5**

(22) Date de dépôt. **08.03.85**

(51) Int Cl.⁴: **F 24 H 1/06**
**B 60 N 3/18**

(30) Priorite **08 03 84 FR 8403587**

(43) Date de publication de la demande:
**02.10.85 Bulletin 85/40**

(84) Etats contractants désignés
**AT BE CH DE FR GB IT LI LU NL SE**

(71) Demandeur: **Rouviere, Yves François Antoine**
**18 rue de la Dauberie Les Mousseaux**
**F-78760 Jouars Pontchartrain(FR)**

(72) Inventeur: **Rouviere, Yves François Antoine**
**18 rue de la Dauberie Les Mousseaux**
**F-78760 Jouars Pontchartrain(FR)**

(74) Mandataire: **Derambure, Christian**
**Cabinet BUGNION ASSOCIES SARL 116, boulevard Haussmann**
**F-75008 Paris(FR)**

(54) **Dispositif distributeur de liquide à température et volume donnés.**

(57) Le distributeur de liquide comporte. en combinaison:
– un premier réservoir (3) de liquide,
– un second réservoir (6) de liquide,
– des moyens de transfert (7). d'un volume donné de liquide. du premier réservoir (3) au second réservoir (6)
– des moyens de mise en température (14), du volume de liquide transféré,
– des moyens de contrôle (19), de la température du liquide, dans le second réservoir (6),
– des moyens de contrôle (20), de la quantité de liquide délivrée,

Application notamment pour distribuer de l'eau de boisson, à l'intérieur d'un véhicule.

FIG.1

EP 0 156 719 A1

0156719

DISPOSITIF DISTRIBUTEUR DE LIQUIDE
A TEMPERATURE ET VOLUME DONNES

La présente invention concerne un distributeur de liquide,
à température et volume désirés, notamment un distributeur
d'eau pour véhicule.

On sait que les constructeurs d'automobiles ont pour souci
principal d'apporter à ce moyen de locomotion indispensable
à la vie quotidienne de l'homme, le maximum de confort ;
l'usager l'utilisant de plus en plus souvent et pendant un
temps de plus en plus important.

Par ailleurs, ces automobiles sont utilisées de plus en
plus professionnellement, notamment  par des représentants,
des livreurs, des chauffeurs routiers, etc.

Ces utilisateurs ressentent le besoin de consommer des
boissons chaudes ou froides lors de leurs déplacements

Pour ce faire, habituellement, ils emportent des bouteilles
d'eau minérale ou de boissons chaudes qu'ils disposent dans
des récipients conservant la chaleur ou maintenant la
liquide à température désirée. Cependant, ce mode de faire
présente des inconvénients qui sont, par exemple, que
l'utilisateur ne peut avoir à sa disposition qu'une variété
de boissons, par exemple du café chaud, et non une pluralité
de boissons. De plus, la température de la boisson n'est pas controlée et souvent, par temps chaud, les boissons que l'on souhaite  consommer fraîches sont à la température ambiante (par exemple + 25 ou même + 40° C.) et, au contraire, les boissons qu'on  désire  consommer chaudes, comme le café, le chocolat, etc., sont à une température insuffisante, par exemple 10°C, par temps froid.

La présente invention vise à pallier ces inconvénients.

A cet effet, l'invention concerne un dispositif distributeur de liquide, à température désirée, caractérisée par le fait qu'il comporte, en combinaison, un premier réservoir de liquide, un second réservoir de liquide, des moyens de transfert d'un volume donné de liquide du premier réservoir dans le second réservoir, des moyens de mise en température du volume transféré, des moyens de contrôle de la température du liquide dans le second réservoir et enfin, des moyens de contrôle de la quantité de liquide délivrée.

Par conséquent, l'utilisateur peut obtenir, grâce au dispositif de la présente invention, un certain volume de liquide à une certaine température désirée. Les moyens de mise en tempér. ture et de contrôle de la température permettent donc d'obtenir une température variable et contrôlée, en fonction des désirs de l'utilisateur. De même, le volume qui est délivré est réglé et variable en fonction de l'utilisateur.

De préférence, les moyens de mise en température du volume trar féré sont constitués par une résistance électrique, chauffante se trouvant à l'intérieur du second réservoir.

Selon un autre mode de réalisation de l'invention, les moyens ( mise en température du volume transféré font partie intégrante second réservoir de liquide et sont constitués notamment par un tube coudé, ou serpentin, chauffé, et à l'intérieur duquel circule le volume donné de liquide.

Les moyens de transfert d'un volume donné de liquide sont constitués par une pompe soutirant du liquide du premier réservoir.

Ces moyens de transfert qui soutirent le volume du premier réservoir, le font selon un débit constant et pendant un temps de transfert variable en fonction du volume désiré.

De préférence, les moyens de contrôle de la quantité de liquide délivré sont constitués par une seconde pompe de vidange du second réservoir.

Enfin, on prévoit, selon l'invention, des moyens qui permettent de rendre actifs les moyens de chauffage du volume transféré, constitués par des interrupteurs. On prévoit aussi des moyens de visualisation de la température et des moyens de dégivrage du premier réservoir, au cas où ce premier réservoir serait soumis à une température extérieure inférieure à 0°C.

De préférence, le liquide distribué est de l'eau.

La description suivante, en regard des dessins annexés à titre d'exemples non limitatifs, permettra de comprendre comment l'invention peut être mise en pratique.

La figure 1 est une vue schématique du dispositif selon l'invention dans son ensemble.

La figure 2 est une vue du premier réservoir de liquide.

La figure 3 est une vue d'un mode de réalisation différent du premier réservoir de liquide.

- 4 -

0156719

La figure 4 est une vue d'un autre mode de réalisation du dispositif distributeur de liquide, selon l'invention.

La figure 5 est une vue des moyens de dégivrage du premier réservoir.

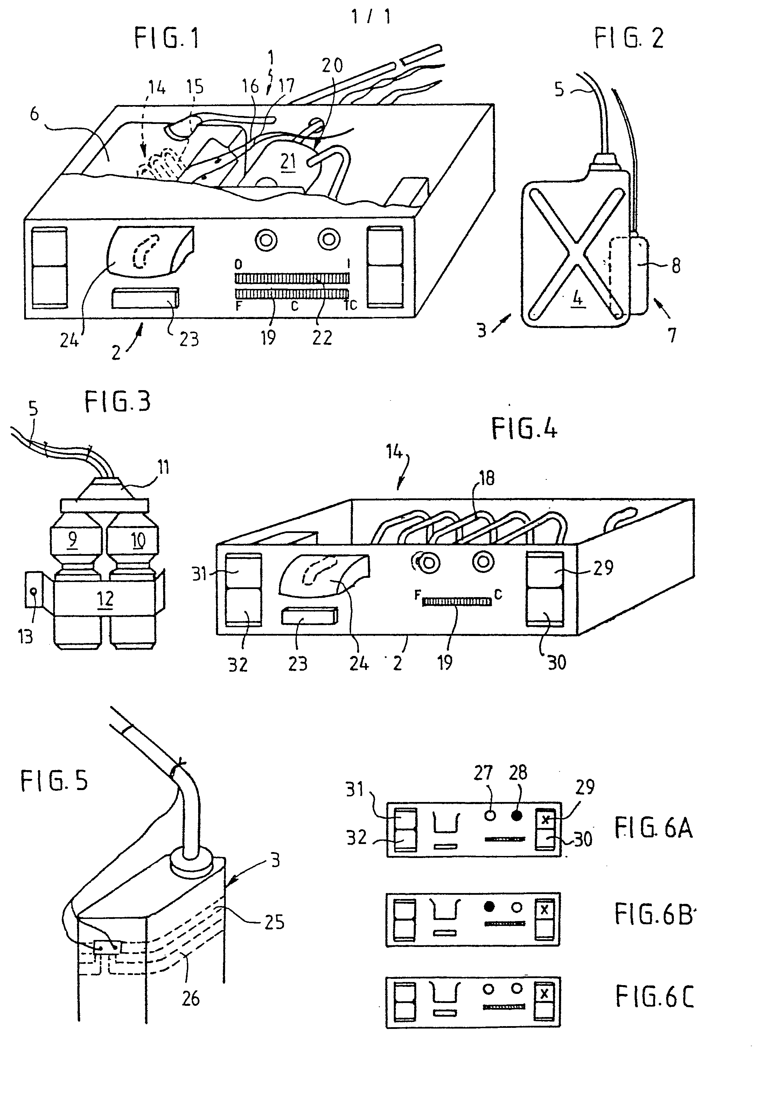

Enfin, les figures 6a, 6b, 6c, montrent les étapes d'utilisation du dispositif de l'invention.

Le dispositif distributeur de liquide à température et volume désirés, selon l'invention, référencé en 1 sur les figures, comprend, en premier lieu, un boîtier 2, comportant les différents organes du dispositif. Ce boîtier 2 est, par exemple, rectangulaire et peut se placer dans l'espace prévu, par exemple, pour un auto-radio. Il peut être intégré soit à la console d'équipement, soit sous la planche de bord, soit à tout autre endroit. Sa forme et son volume sont quelconques et permettent notamment de s'adapter à tout genre de véhicule, ou permettent de s'intégrer de façon correcte à la décoration.

Le dispositif 1 comporte, en premier lieu, un premier réservoir 3 de liquide 4. Ce réservoir est disposé à l'extérieur du boîtier 2 et est d'une capacité importante, par exemple, de 3 litres et plus. Il est relié par une conduite 5 d'amenée de liquide, à un second réservoir 6 de liquide, qui est disposé à l'intérieur du boîtier 2, de préférence.

Des moyens de transfert 7 permettent de prélever du liquide 4 se trouvant dans le premier réservoir 3 et de l'amener par la conduite d'amenée 5, dans le second réservoir 6. De préférence, ces moyens de transfert 7 sont tels qu'ils amènent un volume donné de liquide, du premier réservoir 3 dans le second réservoir 6.

Selon un mode de réalisation préféré de l'invention, les moyens de transfert 7 sont constitués par une pompe 8. Cette pompe 8 soutire un volume de liquide 4, du premier réservoir 3, selon, par exemple, un débit constant et pendant un temps de transfert variable en fonction du volume de liquide 4, que l'on désire transférer. Par ailleurs, le volume transféré de liquide peut être donné par la pompe 8 elle-même.

Selon le mode de réalisation représenté sur la figure 3, le premier réservoir peut être constitué par une ou plusieurs bouteilles 9, 10, par exemple d'eau minérale, qui sont reliées entre elles par une fixation rapide 11, reliée à la conduite d'amenée 5 ; les bouteilles 9, 10 étant solidarisées l'une à l'autre par une patte, par exemple métallique 12, les entourant, et fixée à une partie de la carrosserie ou du coffre par l'intermédiaire de fixations (non représentées) passant à travers un orifice 13, de la patte.

Le dispositif selon l'invention comporte des moyens de mise en température 14, du volume de liquide transféré.

Selon un premier mode de réalisation de l'invention, les moyens de mise en température 14, du volume transféré, sont constitués par une résistance électrique chauffante 15, se trouvant à l'intérieur du second réservoir 6 (voir figure 1). Cette résistance chauffante 15 est reliée à une source d'énergie, généralement existante sur tous véhicules à moteur, batterie ou accumulateur délivrant du courant continu en 12 volts par exemple.

Selon un autre mode de réalisation de l'invention (représenté plus particulièrement sur la figure 4) les moyens de mise en température 14 du volume transféré, font partie intégrante du second réservoir de liquide. Par partie intégrante du second réservoir de liquide, on entend que les moyens de mise en température 14 et le réservoir de liquide ne sont qu'un seul et même organe. Ainsi, comme on l'a représenté sur la figure 4, ces moyens de mise en température 14 sont constitués par_____

0158719

un tube coudé 18, ou un serpentin chauffé, à l'intérieur duquel circule le volume de liquide 4, prélevé dans le réservoir extérieur 3.

Le dispositif selon l'invention, comporte en outre des moyens de contrôle 19 de la température du liquide, dans le second réservoir 6 ou à travers le serpentin 18. Ces moyens de contrôle 19 rendent actifs les moyens de chauffage 14, quand la température du liquide désirée n'est pas atteinte et rendent inactifs les moyens de chauffage 14 lorsque cette température désirée du liquide est atteinte.

Par moyens de mise en température dans la présente description et dans les revendications, on entend des moyens permettant de parvenir à une température désirée donnée. Cette température peut varier entre + 4° et + 30° à 80° C., selon que l'on désire obtenir une boisson fraîche ou une boisson chaude, par exemple une boisson à base de mélange de sirop de fruit et d'eau ou à base de mélange de poudre de café lyophilisé et d'eau.

Les moyens de contrôle de la température désirée du liquide sont matérialisés, par exemple, pour l'utilisateur, par un disque tournant gradué 19a (voir notamment figure 1 et 4).

Le dispositif comporte, en outre, des moyens de contrôle 20, de la quantité de liquide délivrée.

Selon un mode de réalisation de l'invention, les moyens de contrôle 20, de la quantité de liquide délivrée, sont constitués par une seconde pompe 21, de vidange du second réservoir 6. Cette pompe est commandée par l'intermédiaire d'un disque gradué 22 tournant (voir notamment figure 1).

Selon le mode de réalisation représenté sur la figure 4, il n'est pas nécessaire de prévoir une seconde pompe 21.

En effet, le liquide ne passant pas par un réservoir, il est directement propulsé par la pompe 8 et circule dans le serpentin 18.

La quantité désirée de liquide est alors simplement obtenue par une pression plus ou moins longue de l'interrupteur 23, placé sous le bec verseur 24.

Enfin, pour pouvoir utiliser l'appareil par tous les temps, et notamment lorsque la température extérieure est inférieure à 0° C., on prévoit des moyens de dégivrage 25 (voir figure 5) constitués par une faible résistance intégrée 26.

D'une façon générale, le dispositif selon l'invention, comporte, de manière connue, des voyants lumineux 27, 28, des interrupteurs 29,30, permettant la mise en fonction des moyens de chauffage et des touches 31, 32 permettant le dégivrage du réservoir externe 3, éventuellement.

Les disques de réglage 19 et 22, permettent le réglage de la température à une valeur désirée et du volume distribué de liquide, à une valeur donnée.

Ainsi, le dispositif peut être destiné à chauffer le liquide, pour le porter, à partir de la température ambiante, à une température plus élevée choisie, allant jusqu'à 85-90°C. Il peut aussi être destiné à refroidir le liquide, pour le porter d'une température ambiante à une température basse pouvant aller jusqu'à 4° C.

Enfin, le dispositif est destiné, soit à chauffer, soit à refroidir l'eau, l'utilisateur intervenant pour régler la température haute ou basse désirée, entre + 4°C et + 90° C environ.

Le dispositif est tel que selon un autre mode de réalisation, le liquide est porté à température par passage à l'intérieur d'un bloc chauffé compact. Le liquide peut aussi être porté à température par simple passage sur une résistance électrique, chauffée elle-même par courant électrique. Par exemple, le liquide peut passer dans un tube, à l'intérieur duquel. on a placé une résistance chauffante puisque portée au rouge.

Le dispositif est tel que selon un autre mode de réalisation, la vidange du réservoir 6, après chauffage de son contenu est opérée, par un apport nouveau d'eau 4, non encore chauffée, provenant du réservoir 3, et propulsée par les moyens de transfert 7 et de préférence la pompe 8.

Le liquide nonchauffé 4, poussant le liquide chaud se trouvant à l'intérieur du réservoir6, l'usage d'une pompe de vidange 21 n'est plus nécessaire, le moyen de contrôle du volume désiré de liquide chaud étant alors, opéré par la pression plus ou moins longue de l'interrupteur 23 placé sous le bec verseur 24.

Le dispositif a pour fonction, et sur commande de l'utilisateur, d'assurer le transfert d'un volume déterminé d'eau potable, d'un réservoir, à un réchauffeur, de porter ledit volume d'eau à température, et d'aviser l'utilisateur de la disponibilité de l'eau ainsi chauffée, que celui-ci prélèvera, pour la composition de boissons chaudes de son choix.

REVENDICATIONS

1. Dispositif distributeur de liquide à température et volume désirés, caractérisé par le fait qu'il comporte en combinaison : - un premier réservoir(3),de liquide,

- un second réservoir(6),de liquide,

- des moyens de transfert(7),d'un volume donné de liquide, du premier réservoir (3)au second réservoir(6)

- des moyens de mise en température (14), du volume de liquide transféré,

- des moyens de contrôle(19),de la température du liquide,dans le second réservoir(6),

- des moyens de contrôle(20),de la quantité de liquide délivrée,

2. Dispositif selon la revendication 1, caractérisé par le fait que les moyens de mise en température (14) sont constitués par une résistance électrique chauffante(15),se trouvant à l'intérieur du second réservoir(6).

3. Dispositif selon l'une quelconque des revendications 1 et 2, caractérisé par le fait que les moyens de mise en température (14) du volume transféré font partie intégrante du second réservoir de liquide et sont constitués par un tube coudé ou serpentin (18),chauffé,à l'intérieur duquel circule le volume donné du liquide(4).

4. Dispositif selon l'une quelconque des revendications 1 à 3, caractérisé par le fait que les moyens de transfert(7) d'un volume donné de liquide(4),sont constitués par une pompe (8),soutirant du liquide du premier réservoir(3).

5. Dispositif selon l'une quelconque des revendications 1 à 4, caractérisé par le fait que les moyens de transfert (7) soutirent le volume de liquide (4) du premier réservoir (3) selon un débit constant et pendant un temps de transfert variable en fonction du volume désiré.

6. Dispositif selon les revendications 1, 2, 4 et 5, caractérisé par le fait que les moyens de contrôle (20) de la quantité de liquide (4) délivré, sont constitués par une seconde pompe (21) de vidange du second réservoir (6).

7. Dispositif selon l'une quelconque des revendications 1 à 6, caractérisé par le fait qu'il comporte des moyens permettant de rendre actifs les moyens de mise en température (14) du volume de liquide transféré, constitués par des interrupteurs (29, 30).

8. Dispositif selon l'une quelconque des revendications 1 à 7, caractérisé le fait qu'il comporte des moyens de visualisation de la température, constitués par les touches (31, 32).

9. Dispositif selon l'une quelconque des revendications 1 à 8, caractérisé par le fait qu'il comporte des moyens de dégivrage (25) du premier réservoir (3).

10. Dispositif selon l'une quelconque des revendications 1 à 9, caractérisé par le fait que le seul moyen de transfert 7, de préférence la pompe 9, opère deux fonctions, une consistant à soutirer le liquide (4) du réservoir (3) et le transférer dans le réservoir (6), l'autre consistant à vidanger le réservoir (6), par un nouvel apport d'eau non chauffée (4), poussant l'eau chauffée vers l'extérieur du réservoir (6).

FIG.1

14 15 16 1 17 20

6

21

24 2 23 19 22

FIG.2

5

4

3 7 8

FIG.3

5

11

9 10

12

13

FIG.4

14 18

31 29

F C

32 23 24 2 19 30

FIG.5

3

25

26

27 28

31 29

32 X 30

FIG.6A

FIG.6B

FIG.6C

# RAPPORT DE RECHERCHE EUROPEENNE

**0156719**
Numéro de la demande

Office européen
des brevets

EP 85 40 0459

## DOCUMENTS CONSIDERES COMME PERTINENTS

| Categorie | Citation du document avec indication, en cas de besoin, des parties pertinentes | Revendication concernée | CLASSEMENT DE LA DEMANDE (Int. Cl.4) |
|---|---|---|---|
| A | DE-A-2 928 255 (F.I.M.I.S. S.r.l.)<br>* Revendication 1; figure 1 * | 1,3,7 | F 24 H 1/06<br>B 60 N 3/18 |
| A | GB-A- 990 459 (ARNOT)<br>* Revendications 1,8,10,12 * | 1,2,4,7 | |
| A | FR-A-2 105 400 (DEBRELZENY)<br>* Revendications; figures * | 1,2,7 | |

**DOMAINES TECHNIQUES RECHERCHES (Int. Cl.4)**

F 24 H
B 60 N

Le présent rapport de recherche a été établi pour toutes les revendications

| Lieu de la recherche | Date d'achèvement de la recherche | Examinateur |
|---|---|---|
| LA HAYE | 06-06-1985 | VAN GESTEL H.M. |